# EUROPÄISCHE PATENTANMELDUNG

(11) **EP 0 943 827 A2**
(43) Veröffentlichungstag der Anmeldung: **22.09.1999**
(21) Anmeldenummer: 98890367.0
(22) Anmeldetag: 14.12.1998
(51) Int. Cl.: F16D 3/12

(54) **Kupplungsglied**

(30) Priorität: 20.03.1998 AT 48998
(71) Anmelder: Dr. Ing. Geislinger & Co. Schwingungstechnik Gesellschaft m.b.H., 5300 Hallwang/Salzburg (AT)
(72) Erfinder: Pfeifer, Peter, Dipl.-Ing., 5020 Salzburg (AT)
(74) Vertreter: Hübscher, Heiner, Dipl.-Ing.

(57) **Zusammenfassung**

Ein Kupplungsglied (1) zum Einbau in eine drehmomentübertragende Antriebsverbindung umfaßt einen rohrförmigen, gegebenenfalls stirnseitige Anschluß-flansche (3, 4) aufweisenden Grundkörper (2), der wenigstens zwei Lagen (21, 22) entlang gegensinniger Schraubenlinien gewundener Wicklungen umfaßt. Um einem solchen Grundkörper Drehelastizitätseigenschaften und Verlagerungsfähigkeiten für einen Versatzausgleich zu verleihen, bestehen die Wicklungen aus über die Wickellänge durchgehenden, jeweils in voneinander beabstandeten Windungen (51, 61) verlaufenden Strängen (5, 6), wobei die Stränge (5, 6) benachbarter Lagen (21, 22) lediglich an den Kreuzungsstellen (7) der Windungen (51, 61) miteinander verbunden und zwischen den Windungen (51, 61) Hohlräume (8) freigelassen sind.

## Beschreibung

Die Erfindung bezieht sich auf ein Kupplungsglied zum Einbau in eine drehmomentübertragende Antriebsverbindung mit einem rohrförmigen, gegebenenfalls stirnseitige Anschlußflansche aufweisenden Grundkörper, der wenigstens zwei Lagen entlang gegensinniger Schraubenlinien gewundener Wicklungen umfaßt.

Die Grundkörper solcher Kupplungsglieder bestehen bisher aus faserverstärkten Kunststoffen, wobei die Verstärkungsfasern ein in eine Kunstharzmatrix engebettetes Geflecht aus gegensinnig schraubenlinienförmig verlaufenden Faserwicklungen ergeben. Diese Grundkörper haben sich auf Grund der Eigenschaften des faserverstärkten Kunststoffes, wie rationelle Herstellung, Wartungsfreiheit, hohe Belastbarkeit, Verschleißunanfälligkeit u. dgl., bestens bewährt, wobei allerdings wegen der in der Kunstharzmatrix eingebetteten Verstärkungsfasern und der dadurch bei Auftreten von Drehbelastungen unvermeidlichen hohen Reibungskräfte zwischen Fasern und Kunstharz und wegen der kraftschlüssigen Verbindung zwischen den sich berührenden Fasern bzw. der Kunstharzfüllung der Zwischenräume eine hohe Torsionssteifigkeit und Biegefestigkeit entsteht, die für viele Anwendungsfälle erwünscht sind, aber den Einsatz dieser Kupplungsglieder bei drehelastischen und versatzausgleichsfähigen Antriebsverbindungen, sei es als Verbindungselement zwischen den beiden Hälften einer Wellenkupplung oder unmittelbar als Wellenteil eines Antriebsstranges od. dgl., ausschließen.

Bisher werden als drehelastische Kupplungen vielfach Gummikupplungen eingesetzt, deren drehmomentübertragende Gummikörper im wesentlichen auf Scherung beansprucht wird, so daß sich über seine Querschnitte annähernd gleiche Spannungen einstellen und das Gummimaterial als Federelement gut genützt werden kann. Gummikupplungen sind jedoch aufwendiger und führen zu Schwierigkeiten bei der Abfuhr der durch die inneren Reibungskräfte entstehenden Wärme.

Drehelastische Kupplungen mit Stahlfedern als drehmomentübertragende Teile sind wegen der schlechten Werkstoffnutzung der Federelemente, die bei Biege- und Torsionsbelastungen lediglich in den Oberflächenbereichen Zug- bzw. Druckspannungen aufnehmen, in der mittleren neutralen Phase aber ungenützt bleiben, überdimensioniert und stellen auch an die Herstellung zu hohe Ansprüche, so daß sie als Massenprodukt, beispielsweise als drehelastische Kupplungen für Dieselmotorantriebe, kaum Verwendung finden.

Der Erfindung liegt daher die Aufgabe zugrunde, ein Kupplungsglied der eingangs geschilderten Art zu schaffen, das verhältnismäßig rationell herstellbar ist, sich durch seine Drehelastizität und Ausgleichsfähigkeit auszeichnet und auch alle Voraussetzungen für einen Einsatz bei Dieselmotorantrieben bietet.

Die Erfindung löst diese Aufgabe dadurch, daß die Wicklungen aus über die Wickellänge durchgehenden, jeweils in voneinander beabstandeten Windungen verlaufenden Strängen bestehen, wobei die Stränge benachbarter Lagen lediglich an den Kreuzungsstellen der Windungen miteinander verbunden und zwischen den Windungen Hohlräume freigelassen sind. Dieser spezielle Aufbau bedingt bei einer Torsionsbelastung des Grundkörpers in den Strängen entsprechend der jeweiligen Windungsrichtung reine Zug- oder reine Druckspannungen, so daß es zu einer gleichmäßigen Querschnittsbelastung des Strangmaterials und damit zu einem optimalen Materialnutzungsgrad kommt. Dabei wirken auf die einzelnen Stränge wegen der fehlenden Einbettung in eine Kunstharzmatrix od. dgl. und der fehlenden gegenseitigen Berührung praktisch keine Reibungskräfte ein, wodurch sich die Stränge belastungsabhängig unbehindert dehnen oder stauchen können, was eine entsprechende Drehelastizität mit sich bringt.

Die paarweise jeweils entgegengesetzt schraubenlinienförmig verlaufenden Strangwindungen, die sich bei einer Drehbelastung in Abhängigkeit vom Windungssinn relativ zur Drehbelastung aufweiten oder zusammenziehen, stützen sich aufeinander ab und ergeben einen selbsttragenden Rohrkörper. Die Windungen benachbarter Lagen führen wegen ihrer gegensinnigen Windungsrichtungen unter Drehbelastung gleichgerichtete Axialbewegungen durch, womit die Windungen benachbarter Lagen an den jeweiligen Kreuzungsstellen ohne Beeinträchtigung der Bewegungsfreiheiten der Stränge miteinander verbunden werden können, welche Verbindungen die erforderliche Stabilität und Formfestigkeit sicherstellen. Der Grundkörper besitzt überraschend gute Drehelastizitätseigenschaften und zeigt zusätzlich wegen der bettungsfreien und in gegenseitig beabstandeten Windungen gewickelten Stränge beachtliche Biegeweichheit, so daß nicht nur ein drehelastischer, sondern auch im beträchtlichen Ausmaß verlagerungsfähiger Grundkörper entsteht, der einen Ausgleich axialer, radialer oder winkeliger Versätze im Antriebsstrang erlaubt und wegen der freien Zwischenräume zwischen den Windungen auch keinerlei Wärmeabfuhrprobleme mit sich bringt. Je nach Wahl des Strangmaterials, des Strangdurchmessers, der Windungsart, der Stranglänge und nicht zuletzt der Anzahl und Stärke der Stranglagen u. dgl. - lassen sich die Grundkörpereigenschaften an die jeweiligen Einsatzzwecke anpassen. Zur Ein- und Ableitung der zu übertragenden Drehmomente können stirnseitig am Grundkörper die jeweils bestens geeigneten Anschlußvorrichtungen vorgesehen sein, wobei in den meisten Fällen übliche Anschlußflansche genügen, die einfach am Grundkörper festgeklebt werden können. Es ergibt sich ein rationell herstellbares Kupplungsglied, das sich wegen seiner Drehelastizität und Ausgleichsfähigkeit in weiten Bereichen einsetzen läßt und sich speziell auch zum Einbau in eine Wellenkupplung für Dieselmotorantriebe eignet.

Um die Eigenschaften faserverstärkter Kunststoffe zu nutzen, können die Stränge aus kunstharzgebundenen Verstärkungsfasern bestehen, welche Faserstränge aus Metall-, Glas- oder Kohlefasern oder auch anderen Materialien homogenen Querschnitts hergestellt oder aber auch aus Einzelfasern in Art von Litzenseilen zusammengefaßt sind, wobei insbesondere aus Einzelglasfasern zusammengeklebte Glasfaserstränge gegebenenfalls unterschiedlicher Durchmesser verwendet werden.

Vorteilhafterweise können die Stränge auch aus einem Elastomer bestehen, die an den Kreuzungsstellen aneinandervulkanisiert bzw. aneinandergeklebt sind und auf Grund ihrer gummielastischen Eigenschaften Grundkörper hoher Drehweichheit und Versatzfähigkeit ergeben.

Besitzt der Elastomerstrang einen Rechtecksquerschnitt, stehen für die Verbindungen an den Kreuzungsstellung größere Berührungsflächen zur Verfügung, die einen sicheren Zusammenhalt der Windungen gewährleisten.

Um die Anpassungsmöglichkeiten des Kupplungsgliedes an die verschiedenen Anforderungen zu erweitern, können Grundkörper unterschiedlicher Durchmesser koaxial zusammengesteckt und zu einer Grundkörpereinheit zusammengefaßt sein, wobei die einzelnen Grundkörper stirnseitig gemeinsame Anschlußflansche aufweisen. Damit ist es möglich, einzelne Grundkörper unterschiedlicher Eigenschaften zu kombinieren und das Kupplungsglied in seinem Verhalten auch hinsichtlich extremer Verhaltensweisen auszulegen. Die Grundkörpereinheiten sind aus vorgefertigten Standardgrundkörpern zusammensetzbar, was die Herstellung vereinfacht, und die gemeinsamen Anschlußflansche dienen nicht nur zur gegenseitigen Verbindung der Grundkörper, sondern gewährleisten auch das gleichmäßige Einleiten der zu übertragenden Drehmomente in alle Grundkörper.

Besitzen die Windungen der Stränge höchstens eine Steigung von 10°, lassen sich auch innerhalb verhältnismäßig kurzer axialer Abschnitte durch eine entsprechende Windungszahl große Wickellängen der Stränge erreichen und damit das Dehnungsverhalten beeinflussen, wobei Dehnungen bzw. Stauchungen der Stränge zu unbedeuteten axialen Längenänderungen führen.

Nach einer speziellen Ausgestaltung der Erfindung sind die Stränge mit einer plastischen Umhüllung versehen, so daß bei einer Verlängerung bzw. Stauchung der Faserstränge die Umhüllung mitverformt wird und durch die innere Reibung eine Dämpfungswirkung entsteht, was die Herstellung eines drehelastischen und schwingungsdämpfenden Kupplungsgliedes ermöglicht.

Um eine rationelle Herstellung des Kupplungsgliedes mit Strängen aus kunstharzgebundenen Verstärkungsfasern zu erreichen, wird der vorgefertigte Faserstrang über einen Dorn in wenigstens zwei Lagen entlang gegensinniger Schraubenlinien gewickelt, wobei der Faserstrang vor dem Wickeln mit flüssigem Kunstharz getränkt und dann das am Faserstrang haftende Kunstharz durch Erwärmen geliert wird, worauf der Faserstrang gewickelt und der Dorn nach dem Aushärten des Kunstharzes aus der Faserstrangwicklung ausgezogen wird. Durch das Tränken des Faserstranges mit Kunstharz und dem anschließenden Gelieren wird das zur Kunstharzbindung erforderliche Kunstharz auf dem Faserstrang aufgebracht, ohne aber dann ein Abtropfen des Harzes befürchten zu müssen. Durch das Wickeln des Faserstranges einmal in der einen Schraubungsrichtung, dann in der anderen Schraubungsrichtung usw. legen sich die einzelnen Windungen der Lagen kreuzend übereinander und die Kreuzungsstellen werden durch das am Faserstrang haftende Kunstharz miteinander verklebt, wobei das Aushärten üblicherweise in einem entsprechenden Ofen erfolgt, so daß nach dem Aushärten eine ausgesteifte, an den jeweiligen Kreuzungspunkten der Windungen zusammengeklebte Faserstrangwicklung entsteht, die ausreichend stabil und formfest ist und aus der der Dorn problemlos wieder herausgezogen werden kann. Ist die Faserstrangwicklung in ihrer Länge auf das herzustellende Kupplungsglied abgestimmt, braucht diese Faserstrangwicklung lediglich nach einem endseitigen Beschneiden mit den Anschlußflanschen verklebt zu werden und das Kupplungsglied ist einsatzbereit.

Wird zuerst ein überlanges Rohr gewickelt, von dem dann den Grundkörpern entsprechende Stücke abgelängt werden, läßt sich die Grundkörperherstellung weiter vereinfachen, da der Wickel- und Aushärtvorgang gemeinsam für mehrere Grundkörper in Form eines entsprechend überlangen Rohres durchgeführt wird und dann die Grundkörper lediglich von diesem Rohr in gewünschter Länge abgeschnitten zu werden brauchen.

Um dem Grundkörper auch eine schwingungsdämpfende Wirkung zu verleihen, kann die Faserstrangwicklung oder der Grundkörper in ein Bad aus Plastikmasse, beispielsweise einem thermoplastischen Elastomer, getaucht und dann vor dem Trocknen überschüssige Plastikmasse vom Grundkörper bzw. der Faserstrangwicklung abtropfen gelassen werden, so daß um die Stränge eine Umhüllung aus dieser Plastikmasse entsteht, die bei Dehnungserscheinungen zu inneren Reibungen und damit zu Dämpfungswirkungen führt. Durch das Abtropfen der überschüssigen Plastikmasse bleiben die Zwischenräume zwischen den Faserstrangwindungen frei, so daß keine Beeinträchtigung der drehelastischen Eigenschaften oder der Biegeweichheit zu befürchten ist.

In der Zeichnung ist der Erfindungsgegenstand rein schematisch veranschaulicht, und zwar zeigen
- Fig. 1: ein erfindungsgemäßes Kupplungsglied im hälftigen Axialschnitt und
- Fig. 2: ein anderes Ausführungsbeispiel eines erfindungsgemäßen Kupplungsgliedes ebenfalls im hälftigen Axialschnitt.

Ein drehelastisches Kupplungsglied 1, das sich insbesondere auch zum Einsatz in einer Ausgleichskupplung eignet, umfaßt einen rohrförmigen Grundkörper 2, der wenigstens zwei Lagen 21, 22 entlang gegensinniger Schraubenlinien gewickelter Stränge, beispielsweise aus Verstärkungsfasern, aufweist und stirnseitig mit zwei Anschlußflanschen 3, 4 bestückt ist. Die Stränge 5, 6 erstrecken sich durchgehend über die gesamte Wickellänge und verlaufen in jeder Lage 21, 22 in voneinander beabstandeten Windungen 51, 61, wobei sie miteinander lediglich an den Kreuzungsstellen 7 der Windungen 51, 61 verklebt sind. Bei kunstharzgebundenen Verstärkungsfasern dient zum Verkleben ein geeignetes Kunstharz, mit dem die Stränge vor dem Wickeln getränkt werden, so daß durch das Wickeln nur die einander berührenden Stellen der Stränge, also die Kreuzungspunkte der Windungen, verkleben, zwischen den Windungen 51, 61 aber Hohlräume 8 freigelassen werden. Damit entsteht ein stabiler rohrförmiger Grundkörper, der auf Grund der Bewegungsfreiheit seiner Stränge und deren gegensinnigen Schraubenwicklungen bei Torsionsbelastung durch die in den Strängen auftretenden reinen Zug- bzw. Druckspannungen gute drehelastische Eigenschaften mit sich bringt. Durch die Bewegungsfreiheit der nur an den Kreuzungsstellen miteinander verbundene Stränge ist der Grundkörper 2 zudem in allen Richtungen verformbar, so daß sich der Grundkörper 2 außerdem bestens zum Einsatz bei einer Ausgleichskupplung eignet. Zur Ein- bzw. Ausleitung der Drehmomente gibt es Anschlußflansche 3, 4, die am Grundkörper 2 mittels Klebeschicht 9 drehfest verklebt sind.

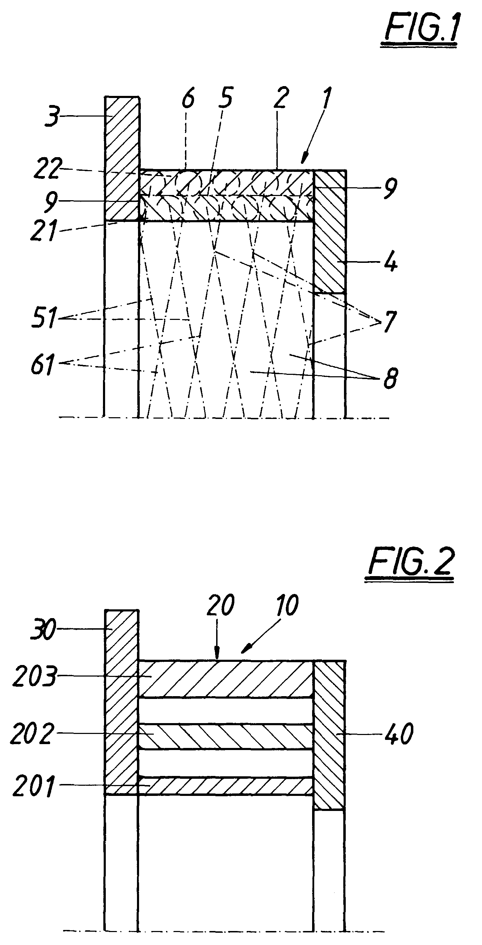

Gemäß dem Ausführungsbeispiel nach Fig. 2 besteht das Kupplungsglied 10 aus einer Grundkörpereinheit 20, die aus einzelnen vorgefertigten Grundkörpern 201, 202, 203 zusammengesetzt ist, welche Grundkörper unterschiedlichen Durchmesser besitzen und koaxial ineinanderstecken, wobei gemeinsame Anschlußflansche 30, 40 für den Zusammenhalt der Grundkörper sorgen und eine gleichmäßige Drehmomentenbelastung der Grundkörpereinheit 20 gewährleisten.

## Patentansprüche

1. Kupplungsglied zum Einbau in eine drehmomentübertragende Antriebsverbindung mit einem rohrförmigen, gegebenenfalls stirnseitige Anschlußflansche aufweisenden Grundkörper, der wenigstens zwei Lagen entlang gegensinniger Schraubenlinien gewundener Wicklungen umfaßt, dadurch gekennzeichnet, daß die Wicklungen aus über die Wickellänge durchgehenden, jeweils in voneinander beabstandeten Windungen (51, 61) verlaufenden Strängen bestehen, wobei die Stränge (5, 6) benachbarter Lagen (21, 22) lediglich an den Kreuzungsstellen (7) der Windungen (51, 61) miteinander verbunden und zwischen den Windungen (51, 61) Hohlräume (8) freigelassen sind.

2. Kupplungsglied nach Anspruch 1, dadurch gekennzeichnet, daß die Stränge aus kunstharzgebundenen Verstärkungsfasern bestehen.

3. Kupplungsglied nach Anspruch 1, dadurch gekennzeichnet, daß die Stränge aus einem Elastomer bestehen.

4. Kupplungsglied nach Anspruch 3, dadurch gekennzeichnet, daß der Elastomerstrang einen Rechtecksquerschnitt besitzt.

5. Kupplungsglied nach einem der Ansprüche 1 bis 4, dadurch gekennzeichnet, daß Grundkörper (201, 202, 203) unterschiedlicher Durchmesser koaxial zusammengesteckt und zu einer Grundkörpereinheit (20) zusammengefaßt sind, wobei die einzelnen Grundkörper (201, 202, 203) stirnseitig gemeinsame Anschlußflansche (30, 40) aufweisen.

6. Kupplungsglied nach einem der Ansprüche 1 bis 5, dadurch gekennzeichnet, daß die Windungen (51, 61) der Stränge (5, 6) höchstens eine Steigung von 10° besitzen.

7. Kupplungsglied nach einem der Ansprüche 1 bis 6, dadurch gekennzeichnet, daß die Stränge (5, 6) mit einer plastischen Umhüllung versehen sind.

8. Verfahren zur Herstellung eines Kupplungsgliedes nach Anspruch 2, nach dem der vorgefertigte Faserstrang über einen Dorn in wenigstens zwei Lagen entlang gegensinniger Schraubenlinien gewickelt wird, dadurch gekennzeichnet, daß der Faserstrang vor dem Wickeln mit flüssigem Kunstharz getränkt und dann das am Faserstrang haftende Kunstharz durch Erwärmen geliert wird, worauf der Faserstrang gewickelt und der Dorn nach dem Aushärten des Kunstharzes aus der Faserstrangwicklung ausgezogen wird.

9. Verfahren nach Anspruch 8, dadurch gekennzeichnet, daß zuerst ein überlanges Rohr gewickelt wird, von dem dann den Grundkörpern entsprechende Stücke abgelängt werden.

10. Verfahren nach Anspruch 8 oder 9, dadurch gekennzeichnet, daß die Faserstrangwicklung oder der Grundkörper in ein Bad aus Plastikmasse getaucht und dann vor dem Trocknen überschüssige Plastikmasse vom Grundkörper bzw. der Faserstrangwicklung abtropfen gelassen wird.
